# EUROPEAN PATENT SPECIFICATION

(11) **EP 3 894 240 B1**
(45) Date of publication and mention of the grant of the patent: **31.01.2024**
(21) Application number: 19816934.4
(22) Date of filing: 02.12.2019
(51) Int. Cl.: B60C 19/00

(54) **TYRE COMPRISING A NOISE-REDUCING ELEMENT**
REIFEN MIT EINEM GERÄUSCHREDUZIERENDEN ELEMENT
PNEU COMPRENANT UN ÉLÉMENT DE RÉDUCTION DU BRUIT

(30) Priority: 12.12.2018 IT 201800011001
(43) Date of publication of application: 20.10.2021
(73) Proprietor: Pirelli Tyre S.p.A., 20126 Milano (IT)
(72) Inventor: DONETTI, Raffaella, 20126 Milano (IT); LANDON, Ross, 20126 Milano (IT); SCOTTI, Andrea, 20126 Milano (IT)
(74) Representative: Tirloni, Bartolomeo
(86) International application number: PCT/IT2019/050252
(87) International publication number: WO 2020/121350

(56) References cited:
- JP-A- 2004 082 947
- JP-A- 2004 168 212

## Description

### Technical field of the invention

The present invention relates to a tyre comprising a noise-reducing element applied on an inner surface of said tyre.

### State of the art

Typically a tyre has a substantially toroidal structure abound an axis of rotation thereof during operation, and it has an equatorial plane perpendicular to the axis of rotation, said equatorial plane typically being a plane of (substantial) geometric symmetry (e.g. neglecting possibly minor asymmetries, such as the tread design and/or the writing on the sides and/or the inner structure).

With "tread band" it is meant the tyre portion radially outermost which comes into contact with the rolling surface, comprising a tread design, typically characterized by reliefs and by grooves.

With "crown portion" it is meant the tyre portion which is at the tread band.

With `inner surface' it is meant the tyre surface not visible when the tyre is mounted on a respective rim.

With `inner cavity' it is meant the space delimited by the inner surface of the tyre and by the surface of the rim that faces to the inner surface of the tyre, when mounted. With 'inner circumferential development' it is meant the linear development of the inner surface of the tyre on its axial middle plane.

The terms "radial" and "axial" and the expressions "radially inner/outer" and "axially inner/outer" are used making reference to respectively a direction perpendicular to and a direction parallel to the axis of rotation of the tyre.

The terms 'circumferential' and 'circumferentially' are instead used making reference to the direction of the annular development of the tyre, i.e. the rolling direction of the tyre.

With 'substantially perpendicular' relatively to geometric elements (such as straight lines, planes, surfaces) it is meant that these elements (or elements parallel to them and incident to each other) form an angle of 90°+/-15°, preferably 90°+/-10°.

With 'substantially parallel', relatively to the aforesaid geometric elements, it is meant that these elements (or elements parallel to them and incident to each other) form an angle of 0°+/-15°, preferably 0°+/-10°.

With 'substantially' together with the terms 'radial, axial, circumferential', relatively to the aforesaid geometric elements it is meant that these elements (or elements parallel to them and incident to each other) form an angle of 0°+/-15°, preferably 0°+/-10°, respectively with the radial, axial and circumferential directions.

It is known applying a noise-reducing element to the inner surface of a tyre. With the expression "noise-reducing element" it is meant an element that, once applied on the inner surface of a tyre (typically on the portion of inner surface placed at the tread band), has the ability to attenuate the noise produced during the rolling due to the presence of the inner cavity (cavity noise). This ability is usually given to the aforesaid element by the type of material, or materials, with which said element is made and/or by the shape and/or by the sizes thereof. The noise-reducing element can be in single body (which typically develops substantially for most of the inner circumferential development), or it can consist of a plurality of noise-reducing sub-elements arranged in sequence along the inner circumferential development of the tyre. This element in single body or each noise-reducing sub-element may consist of a block, for example with substantially parallelepiped shape, made of foam material, for example a sound-absorbing material based on polymeric foams, which is glued to the portion of inner surface of the tyre placed at the tread band.

The documents EP1852279B1, US20040066083 A1, JP 2004 168212 A and JP 2004 082947 A disclose tyres comprising noise-reducing elements.

WO2017001997 discloses a tyre for vehicle wheels comprising at least one sound-absorbing layer fixed to a radially inner surface of the tyre at a tread band wherein the sound-absorbing layer delimits, together with the radially inner surface, a channel which extends along a circumferential direction.

US20120325383 A1 discloses an assembly for tyres comprising a core made of acoustic foam arranged inside the cavity of a tyre for attenuating the cavity noise. The foam core may include an annular base having a plurality of projections arranged on an outer face of the annular base for engaging the inner surface of the tyre and for spacing the annular base out from the inner surface of the tyre.

### Summary of the invention

In the context of high and very high performances tyres (i.e. tyres that allow to reach speeds over 200 km/h and up to over 300 km/h), the Applicant has observed that, during the use of the tyres, the crown portion undergoes a considerable thermal rise due to different factors, such as the deformations of the viscoelastic materials that make it up, the frictions, etc. The tread band at the reliefs of the tread design is particularly subjected to such heating due to the direct contact between the aforesaid reliefs and the rolling surface.

The localized temperature increase that characterizes this thermal rise can lead to the loss of structural integrity of the crown portion of the tyre, even up to the formation of holes ("blistering" phenomenon) at the tread band, due to the localized decomposition of the compound of the tyre subsequently removed due to the rotational movement of the latter and/or to the delamination of the tread, in particular of its central relief.

The Applicant has also observed that the noise-reducing element, typically applied along a main part of the inner surface of the tyre at the tread band for the purpose of the reduction of the cavity noise, can behave as a thermal resistance which hinders a correct dissipation, from the crown portion towards the inner cavity of the tyre, of the heat accumulated by the crown portion, causing a higher thermal rise with respect to the situation in absence of the noise-reducing element.

According to the Applicant the known solutions for the dissipation of the heat accumulated by the crown portion in presence of noise-reducing elements applied on the inner surface of a tyre for high and very high performances are improvable in some aspects.

For example, the Applicant has noted that a noise-reducing element of the type disclosed by US20120325383 A1 seems complex to be made, due to its particular conformation, and/or it seems complex to be applied on a tyre due to the reduced contact area with the inner surface of the tyre which makes the bonding difficult (so as to require a possible oversizing thereof and/or the presence of further rigid fixing elements inside the tyre cavity, with the consequent increase of weight and encumbrance). Furthermore, the noise-reducing element disclosed in US20120325383 A1, due to the presence of the projections which keep the element distant from the inner surface making a gap between element and inner surface, could be structurally weak since the gap would facilitate the onset of fatigue phenomena by deformation during the passage in footprint area.

The Applicant has therefore faced the problem of making a noise-reducing element able to limit the overheating of the crown portion, in particular of the tread band, and which is at the same time able to withstand the severe conditions of use of the high and very high performances tyres, maintaining over time the structural integrity and/or the noise reduction ability and/or the correct positioning.

The Applicant has found that providing the noise-reducing element with radially through openings suitably positioned with respect to the tread band, favours the effective dissipation of the heat accumulated by the crown portion, without compromising the structural integrity of the element itself and/or its noise reduction ability.

According to an aspect the invention relates to a tyre according to claim 1.

With the expression 'prevalent portion' referred to a quantity it is meant at least half of that quantity.

The Applicant has found that the present invention allows to maintain the performance of the tyres comprising a noise-reducing element at the desired level, thanks to a better radial dissipation of the heat from the tread band towards the inner cavity, while ensuring the structural integrity of the noise-reducing element, even at very high speeds (e.g. above 300 km/h).

The present invention provides on the noise-reducing element (at least) one series of openings radially passing through the element itself, i.e. openings which continuously run from one side of the noise-reducing element facing the inner surface of the tyre to an opposite side of the element facing the inner cavity of the tyre. Therefore, each of these openings is delimited by a respective closed surface entirely belonging to said noise-reducing element.

The openings are prevalently placed at a relief, i.e. taken the development of the crown portion on a plane, at least a prevalent portion of the overall top view area of the openings is superimposed on the top view extension of the relief.

These openings not only favour the direct heat transfer between the inner surface and the inner cavity, but thanks to their positioning they also favour such heat transfer precisely at the regions of the crown portion subjected to higher overheating, i.e. the regions corresponding to the reliefs, thus increasing the dissipation efficiency being equal the 'open' surface, and thus maintaining the noise reduction function.

In fact, the air inside the tyre cavity can (substantially) directly (e.g. excluding a possible adhesive layer interposed between the noise-reducing element and the inner surface of the tyre also at the openings) contact the portions of inner surface corresponding to the relief favouring the radial heat dissipation, for example by convection. Moreover, the portions of inner surface left free by the openings can dissipate heat also by irradiation.

Therefore, for a given value of the ratio between volume of the openings and full volume of the noise-reducing element (which affects the structural strength of the element itself and/or its noise reduction ability), the specific positioning of the openings at the reliefs optimizes the effectiveness of these empty spaces in terms of thermal dissipation.

It follows a moderation of the aforesaid phenomenon of thermal rise and an achievement of high levels of tyre performance (e.g. in terms of supported speed). The present invention in one or more of the aforesaid aspects can have one or more of the following preferred features.

Preferably said tyre comprises an adhesive layer (e.g. a pressure sensitive adhesive) interposed between said noise reducing element and said inner surface (for fixing the element itself). This adhesive layer may, or may not, be present at the openings. Preferably each of said one or more reliefs is (substantially, e.g. neglecting minor notches defining the tread design) circumferentially continuous.

Typically, each of said one or more reliefs has a development also along an axial direction.

Preferably said tread band comprises a plurality of grooves with circumferential development, more preferably circumferentially continuous.

Preferably at least one relief of said one or more reliefs (e.g. said relief) is defined by two of said grooves arranged adjacent to, and at opposite sides of, said at least one relief.

Preferably said relief is a relief arranged in an (substantially) axially central portion of the tread band, for example a central relief arranged in an axially central position of the tread band. Since the axially central portion of the tread band is the one typically subjected to higher overheating, the aforesaid positioning of the series of openings optimizes their effectiveness in terms of heat dissipation.

Preferably said noise-reducing element comprises a first face (substantially) entirely adjacent to, and in contact with, said inner surface of said tyre (except for the possible adhesive layer interposed between the element and the inner surface). In other words, there is no cavity between the element and the inner surface, so as to favour the adhesion.

Said noise-reducing element comprises one or more further series of radially through openings, wherein each further series of openings extends along said circumferential development of the inner surface. In this way the heat transfer efficiency of the noise-reducing element is enhanced, which can be extended also to portions of the inner surface axially peripheral with respect to the equatorial plane.

Typically said tread brand comprises at least two reliefs, preferably at least three reliefs, with (continuous) circumferential development, said reliefs being axially distributed.

Preferably at least one, more preferably each, of said one or more further series of openings is placed so that at least a prevalent portion of an overall top view area of the openings of said at least one (or of each) further series of openings is placed at one respective further relief of said one or more reliefs (in addition to said relief). In this way the heat transfer efficiency of the further series of openings is optimized, which is achieved also at regions of the inner surface of the tyre placed at further reliefs of the tread band in addition to the aforesaid relief (e.g. further reliefs axially placed beside the axially central relief).

Preferably said series of openings and said one or more further series of openings are arranged side by side along an axial dimension of said tyre.

Preferably said noise-reducing element comprises at least two further series of radially through openings, more preferably arranged at axially opposite sides of said series of openings. In this way the openings are arranged in optimal way with respect to the tread band having at least three reliefs.

Preferably said noise-reducing element extends along (substantially) the whole circumferential development of the inner surface, for example at least 70%, more preferably at least 80%, of the circumferential development of the inner surface. Preferably the openings of said series of openings, and/or the openings of each of said one or more further series of openings, are arranged, more preferably in (substantially) regular manner, along (substantially) the whole circumferential development of said inner surface. In this way the heat transfer ability is made circumferentially uniform, for limiting every local overheating of the tyre.

Preferably said prevalent portion of overall top view area of the openings of said series of openings, and/or of the openings of said at least one (or of each) further series of openings is greater than or equal to 60%, more preferably greater than or equal to 70%, even more preferably greater than or equal to 80% or equal to 100%, of said overall top view area. In this way the openings are adequately exploited optimizing their heat transfer efficiency.

Preferably a ratio between an overall volume of all the openings present on the element, and an overall volume of the noise-reducing element, is greater than or equal to 0.1, more preferably greater than or equal to 0.15, and/or less than or equal to 0.4, more preferably less than or equal to 0.35. In this way the noise-reducing element is optimized for the facilitation of the heat transfer and at the same time for the reduction of the cavity noise, while maintaining an appropriate structural resistance.

Preferably said series of openings comprises openings having the same shape and/or dimensions. Preferably each further series of openings comprises openings having the same shape and/or dimensions. Preferably all the further series of openings comprise the same number of openings. Preferably the openings of all the further series of openings have the same shape and/or dimensions and/or circumferential arrangement.

In this way the effect of the openings is uniform and the design and/or the construction of the noise-reducing element is simplified.

Preferably a boundary surface of each opening has (substantially) radial development. In this way, with the same thickness of the noise-reducing element, the heat transfer is facilitated for.

Preferably a section of each opening perpendicular to an axis of development of said opening is constant along said axis of development. In this way the heat transfer is optimized, without compromising the mechanical resistance of the noise-reducing element.

In one embodiment each opening of said series of openings, and/or each opening of one or more of said one or more further series of openings, has section perpendicular to an axis of development thereof of circular shape having a diameter. Preferably said diameter is greater than or equal to 2 cm and/or less than or equal to 6 cm, more preferably less than or equal to 5 cm. In this way the openings are sufficiently large to favour the heat transfer without compromising at the same time, given the size of the noise-reducing element or of the noise-reducing sub-elements typically used, the integrity of the noise-reducing element.

In one embodiment each opening of said series of openings, and/or each opening of one or more of said one or more further series of openings, has section perpendicular to an axis of development thereof having an elongated shape with a main dimension. For example, the openings can have oval shape, rectangular shape, etc.

Preferably said main dimension of the openings is substantially parallel to said circumferential development. In this way each opening is substantially parallel to the circumferential development of the reliefs, with benefit to the heat dissipation efficiency.

Preferably said main dimension of each opening has a length greater than or equal to 5 cm and/or less than or equal to 15 cm. In this way the heat transfer of the inner surface of the tyre is favoured without compromising at the same time (given the sizes of the noise-reducing element or of the noise-reducing sub-elements typically used) the integrity of the noise-reducing element and without compromising the cavity noise attenuation.

Preferably said elongated shape comprises two end portions along said main dimension having a lobed shape and a central portion, of reduced size, which interconnects said two end portions. According to the Applicant this shape favours the heat transfer limiting the structural impairment and maintaining the noise reduction properties.

Preferably the openings of said series of openings, and/or the openings of said one or more further series of openings, are (substantially) axially aligned with each other. In other words, the centres of the openings of the same series substantially belong to a same plane perpendicular to the axis of the tyre. In this way the openings are centred with respect to the top view extension of the relief and/or of the respective further relief/s.

The openings are arranged onto said noise-reducing element according to an ordered scheme. In this way the arrangement of the series of openings is rational. Said ordered scheme comprises a base module repeated along said circumferential development, typically in substantially equispaced manner.

Preferably said base module has a first symmetry plane parallel to an equatorial plane of the tyre. Preferably said base module has a second symmetry plane perpendicular to an equatorial plane of the tyre. In this way the definition and repetition of the base module is rational.

Said base module comprises a first set of openings belonging to said series of openings. Preferably a number of openings of said first set is greater than or equal to one, and/or less than or equal to three.

Said base module comprises a second set of openings for each further series of openings. Preferably a number of openings of each second set it is greater than or equal to two, and/or less than or equal to four.

Said noise-reducing element comprises a plurality of noise-reducing sub-elements applied circumferentially in sequence along said circumferential development of the inner surface of said tyre, preferably spaced between each other, more preferably (substantially) equidistant between each other (possibly except for a couple of sub-elements), typically axially aligned. In this way the application of the element to the tyre is facilitated, for example through automated procedures.

Preferably said noise-reducing element, and/or each noise-reducing sub-element, is (in the non-deformed configuration) a (typically rectangular, though not necessarily) parallelepiped. Preferably, said noise-reducing element, and/or each noise-reducing sub-element, has a rectangular shape in top view, preferably having a long side arranged according to said circumferential development and a short side according to an axial direction. In use the respective thickness is arranged radially.

Preferably said noise-reducing element comprises, more preferably it is entirely made of, a sound-absorbing material, preferably a polymeric foam, preferably expanded polyurethane, preferably with open cells.

Preferably the sound-absorbing material has a density ranging from about 5 kg/m³ to about 60 kg/m³.

Preferably all the sub-elements of said plurality of noise-reducing sub-elements have axial width equal between each other (said width being typically determined as a function of the axial width of the tyre). In this way the noise-reducing sub-elements effectively exert their action of noise reduction and dissipation of the heat accumulated by the crown portion.

Preferably said plurality of noise-reducing sub-elements comprises a number of noise-reducing sub-elements greater than or equal to five, more preferably greater than or equal to ten, and/or less than or equal to twenty-five, more preferably less than or equal to twenty. In this way it is possible to cover a given circumferential development of a tyre.

Each noise-reducing sub-element comprises one, and preferably only one, base module. In this way the repetition of the base module is guaranteed by the circumferentially in sequence application of the sub-elements.

### Brief description of the drawings

Figure 1 shows a partial view of a plane development of a crown portion of a tyre according to the present invention, with some parts in transparency;
figure 2 shows a section along the equatorial plane A-A of the tyre of figure 1;
figures from 3 to 7 respectively show a noise-reducing sub-element according to some embodiments of the present invention.

### Detailed description of some embodiments of the invention

The features and the advantages of the present invention will be further clarified by the following detailed description of some embodiments, presented by way of example and not limitative of the present invention, with reference to the attached figures.

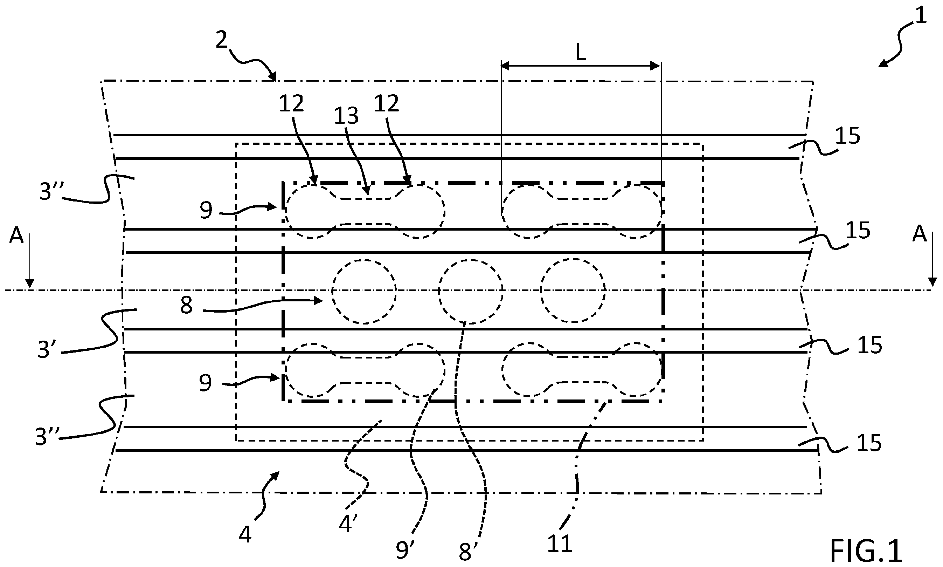

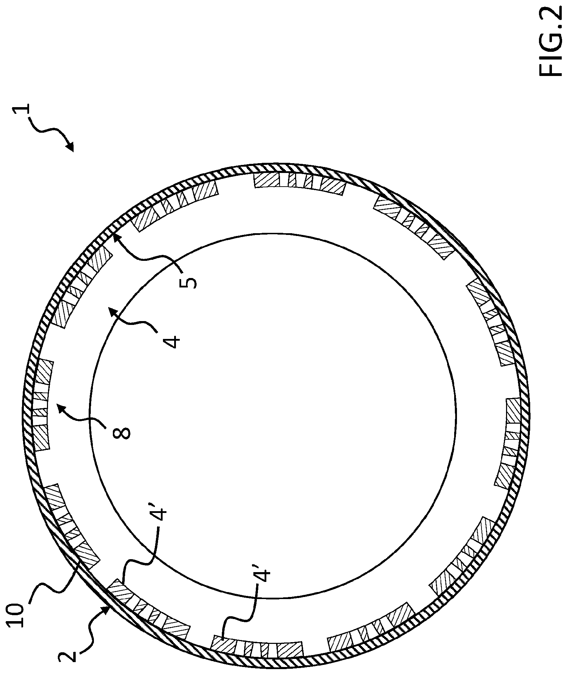

With reference to figures 1 and 2, they show a tyre 1 (only partially shown in figure 1 and shown in section in figure 2) comprising a tread band 2 (only schematically shown) having, for purely illustrative purpose, at least three reliefs (partially shown in figure 1) with continuous circumferential development and axially distributed. Exemplarily the reliefs comprise an axially central relief 3', arranged in axially central position of the tread band, and two further reliefs 3" axially arranged at the sides of the central relief. The central relief is defined (e.g. it is separated from the further reliefs) by a pair of grooves 15 with continuous circumferential development, arranged adjacent to, and at opposite side of, the central relief 3'. During the use of the tyre, it may occur that the relief of the tread band subjected to greater thermal rise is one of the two further reliefs (3"), due to the conditions of use of the tyre and/or the configuration of the vehicle.

Exemplarily the tyre 1 comprises a noise-reducing element 4 (fig. 2) applied on an inner surface 5 of the tyre and extending along substantially the whole circumferential development of the inner surface 5.

Exemplarily the noise-reducing element 4 consists of a plurality (in the example twelve) of noise-reducing sub-elements 4', having axial width (in the example also circumferential length) equal between each other, applied equidistant to each other and circumferentially in sequence along the whole circumferential development of the inner surface 5 of the tyre 1 (as shown in figure 2).

Exemplarily, each noise-reducing sub-element 4' is, in the non-deformed configuration (shown in figures from 3 to 7 and in the plane development of the crown portion of figure 1), a rectangular parallelepiped having a long side 6 arranged according to the circumferential development and a short side 7 arranged according to an axial direction (when the sub-element is applied to the tyre). In use the respective thickness is arranged radially.

Exemplarily each noise-reducing sub-element 4' is entirely made of a sound-absorbing foam of expanded polyurethane with open cell, having a density of about 30 kg/m³. Each noise-reducing sub-element 4' is applied on the inner surface of the tyre by a pressure sensitive adhesive layer (not shown) interposed between each sub-element and the inner surface itself.

Exemplarily each noise-reducing sub-element 4' comprises a first face 10 (figure 2) entirely adjacent to, and in contact with, the inner surface 5 of the tyre 1, except for the aforementioned adhesive layer.

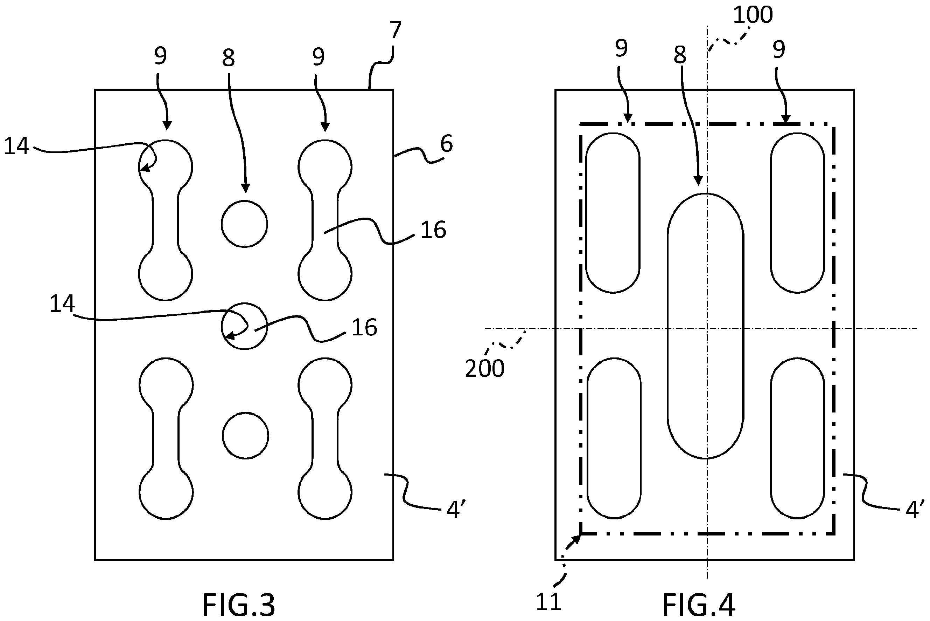

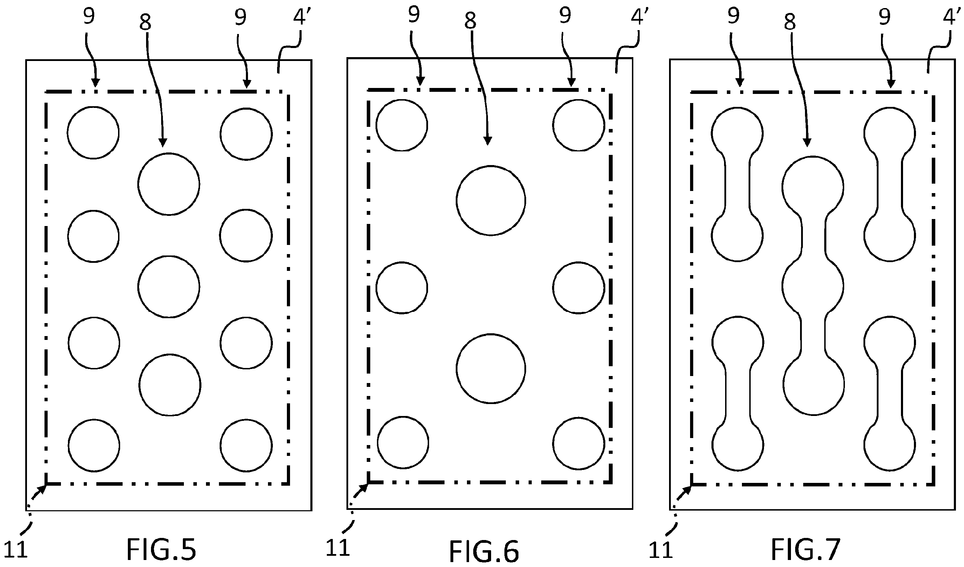

The noise-reducing element 4 comprises a series 8 of openings 8' (entirely shown only in figure 2), arranged in axially central position, and two further series 9 of openings 9' (only partially shown in figures 1 and 3-7) arranged at axially opposite sides of the series 8 of openings.

Each opening of the series 8 and of the further series 9 is radially through and delimited by a respective boundary surface 14 having a radial development and entirely belonging to the noise-reducing element 4. Exemplarily the openings of the series 8 and of the further series 9 are axially aligned (with respect to a same series) and they have a respective section 16, perpendicular to an axis of development thereof (not shown, perpendicular to a lying plane of the openings), constant along the axis of development itself.

In one embodiment not shown, the boundary surface which delimits the openings may not be radial, for example it may have inclined cylinder shape.

The series 8 and the further series 9 of openings develop along the circumferential development of the inner surface 5 of the tyre. The openings of each series are arranged, in substantially regular way, along substantially the whole circumferential development of the inner surface (as shown for the series 8 in figure 2). The arrangement on the noise-reducing element of the openings of the series 8 and of the further series 9 follows an ordered scheme comprising a base module 11 repeated along the circumferential development, in substantially equispaced manner. Exemplarily each noise-reducing sub-element 4' comprises one and only one base module 11, the base module 11 comprising in turn a first set of openings belonging to the series 8 of openings and a pair of second sets of openings, each belonging to a respective further series 9 of openings. The series 8 and the further series 9 of openings are therefore made by the combination in sequence of the noise-reducing sub-elements 4' along the inner circumferential development of the tyre 1. Consequently, the openings made in the noise-reducing sub-elements shown in figure 1 and in figures from 3 to 7 constitute, for each noise-reducing sub-element, a single base module 11 of the ordered scheme according to which the series 8 and the further series 9 of openings are arranged.

With reference to figure 1, which shows a noise-reducing sub-element applied on the inner surface of the tyre, the series 8 of openings (shown only by means of the base module 11) is exemplarily positioned so that an overall top view area of the openings thereof is entirely placed at the axially central relief 3'.

Still with reference to figure 1, each further series 9 of openings (even them shown only through the base module 11) is exemplarily positioned so that at least the 90% of an overall top view area of the respective openings thereof is placed at a respective further relief 3".

Exemplarily each base module 11 has a first symmetry plane 100 parallel to an equatorial plane (not shown) of the tyre and a second symmetry plane 200 perpendicular to the equatorial plane of the tyre 1.

In the figures 1 and 3-7 some embodiments of the base module 11 comprised in the respective noise-reducing sub-element 4' are shown, in which the shape and/or the number of the openings of the first and of the second sets varies.

With reference to figure 1, the shown base module 11 comprises three circular openings belonging to the series 8 and four openings having elongated shape with a main dimension L, two by two belonging to the further series 9 of openings. Consequently, the series 8 of openings comprises openings having the same shape and sizes and the further series 9 of openings comprise the same number of openings, with openings having the same shape, size and circumferential arrangement. Exemplarily the elongated shape of the openings 9' of the further series 9 comprises two end portions 12 along the main dimension having a lobed shape and a central portion 13, of reduced size, which interconnects the two end portions 12.

Exemplarily the main dimension of each opening of the further series of openings 9 is parallel to the circumferential development of the tyre. Exemplarily, the diameter of the circular openings of the series 8 is equal to 3 cm, a length along the main dimension L of each opening of the further series 9 is equal to 7.5 cm, a radius of the lobed portions 12 is equal to 1.25 cm, a length of the central portion 13 is equal to 1.9 cm, and a width of the central portion 13 is equal to 1.25 cm. The noise-reducing sub-element 4' has exemplary dimensions 22x14 cm.

Still with reference to the example of figure 1, a ratio between an overall volume of all the openings present on the sub-element, and an overall volume of the noise-reducing sub-element (defined by the envelope of the outer surface of the noise-reducing sub-element) is equal to about 0.23.

In figures from 3 to 7 further embodiments of noise-reducing sub-elements are shown, each comprising a different base module 11. The base modules 11 differ from each other in the number and/or in the shape and/or size of the openings of the series 8 and/or of the further series 9 of openings. It is possible to observe that these openings can be circular or elongated (lobed or not) with a main dimension. In the case the openings have an elongated shape, the main dimension is preferably parallel to the circumferential development of the tyre (once the respective noise-reducing sub-element has been applied on the inner surface of the tyre itself).

## Claims

1. Tyre (1) comprising a tread band (2) having one or more reliefs (3', 3") with circumferential development, and a noise-reducing element (4) applied on an inner surface (5) of said tyre (1) and extending along a prevalent portion of a circumferential development of the inner surface (5), wherein said noise-reducing element (4) comprises a series (8) of radially through openings (8'), wherein said series (8) of openings extends along said circumferential development of the inner surface (5), wherein said series (8) of openings is placed so that at least a prevalent portion of an overall top view area of the openings (8') of said series (8) of openings is placed at one relief (3') of said one or more reliefs (3', 3"),
wherein said noise-reducing element (4) comprises one or more further series (9) of radially through openings (9'), wherein each further series (9) of openings extends along said circumferential development of the inner surface (5), wherein the openings (8', 9') are arranged onto said noise-reducing element (4) according to an ordered scheme, wherein said ordered scheme comprises a base module (11) repeated along said circumferential development, wherein said base module (11) comprises a first set of openings belonging to said series (8) of openings and a second set of openings for each of said one or more further series (9) of openings (9'), wherein said noise-reducing element (4) comprises a plurality of noise-reducing sub-elements (4') applied circumferentially in sequence along said circumferential development of the inner surface (5) of said tyre (1),
**characterized in that** each noise-reducing sub-element (4') comprises one base module (11).

2. Tyre (1) according to claim 1, wherein at least one of said one or more further series (9) of openings (9') is placed so that at least a prevalent portion of an overall top view area of the openings (9') of said at least one further series (9) of openings is placed at one respective further relief (3") of said one or more reliefs (3', 3").

3. Tyre (1) according to claim 2, wherein said prevalent portion of overall top view area of the openings (8') of said series (8) of openings, and/or of the openings (9') of said at least one further series (9) of openings is greater than or equal to 60%, of said overall top view area.

4. Tyre (1) according to any one of the previous claims, wherein said-noise reducing element (4) extends along substantially the whole circumferential development of the inner surface (5), wherein the openings (8') of said series (8) of openings, and/or the openings (9') of each of said one or more further series (9) of openings, are arranged along substantially the whole circumferential development of said inner surface (5).

5. Tyre (1) according to any one of the previous claims, wherein said series (8) of openings comprises openings (8') having same shape and/or dimensions, wherein each of said one or more further series (9) of openings comprises openings (9') having same shape and/or dimensions, wherein all the further series (9) comprise the same number of openings, and wherein the openings of all the further series of openings have same shape and/or dimensions and/or circumferential arrangement.

6. Tyre (1) according to any one of the previous claims, wherein a boundary surface (14) of each opening (8', 9') has substantially radial development, wherein a section (16) of each opening, perpendicular to an axis of development of said opening, is constant along said axis of development, and wherein the openings of said series (8) of openings, and/or the openings of each of said one or more further series (9) of openings, are substantially axially aligned with each other.

7. Tyre (1) according to any one of the previous claims, wherein said noise-reducing element (4) comprises at least two further series (9) of radially through openings (9'), arranged at axially opposite sides of said series (8) of openings (8').

8. Tyre (1) according to any one of the previous claims, wherein each opening (9') of said one or more further series (9) of openings has section, perpendicular to an axis of development thereof, having an elongated shape with a main dimension (L), wherein said main dimension (L) of the openings is substantially parallel to said circumferential development.

9. Tyre (1) according to claim 8, wherein said main dimension (L) of each opening has a length greater than or equal to 5 cm and less than or equal to 15 cm, and wherein said elongated shape comprises two end portions (12) along said main dimension (L) having a lobed shape and a central portion (13), of reduced size, which interconnects said two end portions (12).

10. Tyre (1) according to any one of the previous claims, wherein each noise-reducing sub-element (4') is a parallelepiped in a non-deformed configuration, wherein said noise-reducing element (4) comprises a sound-absorbing material, made of polymeric foam with open cells, and wherein the sound-absorbing material has a density ranging from about 5 kg/m³ to about 60 kg/m³.

11. Tyre (1) according to any one of the previous claims,.
wherein said base module (11) has a first symmetry plane (100) parallel to an equatorial plane of the tyre (1), and wherein said base module (11) has a second symmetry plane (200) perpendicular to an equatorial plane of the tyre.

12. Tyre (1) according to any one of the previous claims, wherein a number of openings of said first set is greater than or equal to one, and less than or equal to three, -and wherein a number of openings of each second set it is greater than or equal to two, and less than or equal to four.

13. Tyre (1) according to any one of the previous claims, wherein each noise-reducing sub-element (4') comprises only one base module (11)

14. Tyre (1) according to any one of the previous claims, wherein each opening (8') of said series (8) of openings has section, perpendicular to an axis of development thereof, of circular shape having a diameter, wherein said diameter is greater than or equal to 2 cm and less than or equal to 6 cm.

15. Tyre (1) according to any one of the previous claims, wherein a ratio between an overall volume of all the openings present on the noise-reducing element (4), and an overall volume of the noise-reducing element (4), is greater than or equal to 0.1 and less than or equal to 0.4.

## Patentansprüche

1. Reifen (1), der ein Laufflächenband (2) umfasst, das ein oder mehrere Reliefs (3', 3") mit Umfangsentwicklung aufweist, und ein geräuschreduzierendes Element (4), das auf einer Innenfläche (5) des Reifens (1) aufgebracht ist und sich entlang eines überwiegenden Abschnitts einer Umfangsentwicklung der Innenfläche (5) erstreckt, wobei das geräuschreduzierende Element (4) eine Reihe (8) von radial durchgehenden Öffnungen (8') umfasst, wobei sich die Reihe (8) von Öffnungen entlang der Umfangsentwicklung der Innenfläche (5) erstreckt, wobei die Reihe (8) von Öffnungen so angeordnet ist, dass mindestens ein überwiegender Abschnitt eines gesamten Draufsichtbereichs der Öffnungen (8') der Reihe (8) von Öffnungen an einem Relief (3') des einen oder der mehreren Reliefs (3', 3") angeordnet ist,
wobei das geräuschreduzierende Element (4) eine oder mehrere weitere Reihen (9) von radial durchgehenden Öffnungen (9') umfasst, wobei sich jede weitere Reihe (9) von Öffnungen entlang der Umfangsentwicklung der Innenfläche (5) erstreckt, wobei die Öffnungen (8', 9') auf dem geräuschreduzierenden Element (4) gemäß einem geordneten Schema ausgelegt sind, wobei das geordnete Schema ein Basismodul (11) umfasst, das sich entlang der Umfangsentwicklung wiederholt, wobei das Basismodul (11) einen ersten Satz von Öffnungen, die zu der Reihe (8) von Öffnungen gehören, und einen zweiten Satz von Öffnungen für jede der einen oder mehreren weiteren Reihen (9) von Öffnungen (9') umfasst, wobei das geräuschreduzierende Element (4) eine Vielzahl von geräuschreduzierenden Unterelementen (4') umfasst, die in Umfangsrichtung der Reihe nach entlang der Umfangsentwicklung der Innenfläche (5) des Reifens (1) angebracht sind,
**dadurch gekennzeichnet, dass** jedes geräuschreduzierende Unterelement (4') ein Basismodul (11) umfasst.

2. Reifen (1) nach Anspruch 1, wobei mindestens eine der einen oder mehreren weiteren Reihen (9) von Öffnungen (9') so angeordnet ist, dass mindestens ein überwiegender Abschnitt eines gesamten Draufsichtsbereichs der Öffnungen (9') der mindestens einen weiteren Reihe (9) von Öffnungen an einem jeweiligen weiteren Relief (3") der einen oder mehreren Reliefs (3', 3") angeordnet ist.

3. Reifen (1) nach Anspruch 2, wobei der überwiegende Abschnitt des gesamten Draufsichtbereichs der Öffnungen (8') der Reihe (8) von Öffnungen und/oder der Öffnungen (9') der mindestens einen weiteren Reihe (9) von Öffnungen größer als oder gleich 60 % des gesamten Draufsichtbereichs ist.

4. Reifen (1) nach einem der vorhergehenden Ansprüche, wobei sich das geräuschreduzierende Element (4) im Wesentlichen entlang der gesamten Umfangsentwicklung der Innenfläche (5) erstreckt, wobei die Öffnungen (8') der Reihe (8) von Öffnungen und/oder die Öffnungen (9') jeder der einen oder mehreren weiteren Reihen (9) von Öffnungen im Wesentlichen entlang der gesamten Umfangsentwicklung der Innenfläche (5) ausgelegt sind.

5. Reifen (1) nach einem der vorhergehenden Ansprüche, wobei die Reihe (8) von Öffnungen Öffnungen (8') umfasst, die die gleiche Form und/oder die gleichen Abmessungen aufweisen, wobei jede der einen oder mehreren weiteren Reihen (9) von Öffnungen Öffnungen (9') umfasst, die die gleiche Form und/oder die gleichen Abmessungen aufweisen, wobei alle weiteren Reihen (9) die gleiche Anzahl von Öffnungen aufweisen, und wobei die Öffnungen aller weiteren Reihen von Öffnungen die gleiche Form und/oder die gleichen Abmessungen und/oder die gleiche Anordnung in Umfangsrichtung aufweisen.

6. Reifen (1) nach einem der vorhergehenden Ansprüche, wobei eine Begrenzungsfläche (14) jeder Öffnung (8', 9') eine im Wesentlichen radiale Entwicklung aufweist, wobei ein Querschnitt (16) jeder Öffnung senkrecht zu einer Entwicklungsachse der Öffnung entlang der Entwicklungsachse konstant ist, und wobei die Öffnungen der Reihe (8) von Öffnungen und/oder die Öffnungen jeder der einen oder mehreren weiteren Reihen (9) von Öffnungen im Wesentlichen axial zueinander ausgerichtet sind.

7. Reifen (1) nach einem der vorhergehenden Ansprüche, wobei das geräuschreduzierende Element (4) mindestens zwei weitere Reihen (9) von radial durchgehenden Öffnungen (9') umfasst, die an axial gegenüberliegenden Seiten der Reihen (8) von Öffnungen (8') ausgelegt sind.

8. Reifen (1) nach einem der vorhergehenden Ansprüche, wobei jede Öffnung (9') der einen oder mehreren weiteren Reihen (9) von Öffnungen einen Querschnitt aufweist, der senkrecht zu einer Entwicklungsachse davon ist und eine längliche Form mit einer Hauptabmessung (L) hat, wobei die Hauptabmessung (L) der Öffnungen im Wesentlichen parallel zu der Umfangsentwicklung ist.

9. Reifen (1) nach Anspruch 8, wobei die Hauptabmessung (L) jeder Öffnung eine Länge von mehr als oder gleich 5 cm und weniger als oder gleich 15 cm aufweist, und wobei die längliche Form zwei Endabschnitte (12) entlang der Hauptabmessung (L) mit einer gelappten Form und einen zentralen Abschnitt (13) mit reduzierter Größe aufweist, der die beiden Endabschnitte (12) miteinander verbindet.

10. Reifen (1) nach einem der vorhergehenden Ansprüche, wobei jedes geräuschreduzierende Unterelement (4') ein Parallelepiped in einer nicht verformten Konfiguration ist, wobei das geräuschreduzierende Element (4) ein schallabsorbierendes Material umfasst, das aus Polymerschaum mit offenen Zellen hergestellt ist, und wobei das schallabsorbierende Material eine Dichte im Bereich von etwa 5 kg/m³ bis etwa 60 kg/m³ aufweist.

11. Reifen (1) nach einem der vorhergehenden Ansprüche,
wobei das Basismodul (11) eine erste Symmetrieebene (100) aufweist, die parallel zu einer Äquatorialebene des Reifens (1) verläuft, und wobei das Basismodul (11) eine zweite Symmetrieebene (200) aufweist, die senkrecht zu einer Äquatorialebene des Reifens verläuft.

12. Reifen (1) nach einem der vorhergehenden Ansprüche, wobei eine Anzahl von Öffnungen des ersten Satzes größer als oder gleich eins und kleiner als oder gleich drei ist und wobei eine Anzahl von Öffnungen jedes zweiten Satzes größer als oder gleich zwei und kleiner als oder gleich vier ist.

13. Reifen (1) nach einem der vorhergehenden Ansprüche, wobei jedes geräuschreduzierende Unterelement (4') nur ein Basismodul (11) umfasst.

14. Reifen (1) nach einem der vorhergehenden Ansprüche, wobei jede Öffnung (8') der Reihe (8) von Öffnungen einen senkrecht zu ihrer Entwicklungsachse verlaufenden kreisförmigen Querschnitt mit einem Durchmesser aufweist, wobei der Durchmesser größer als oder gleich 2 cm und kleiner als oder gleich 6 cm ist.

15. Reifen (1) nach einem der vorhergehenden Ansprüche, wobei ein Verhältnis zwischen einem Gesamtvolumen aller Öffnungen, die auf dem geräuschreduzierenden Element (4) vorhanden sind, und einem Gesamtvolumen des geräuschreduzierenden Elements (4) größer als oder gleich 0,1 und kleiner als oder gleich 0,4 ist.

## Revendications

1. Pneumatique (1) comprenant une bande de roulement (2) ayant un ou plusieurs reliefs (3', 3") à développement circonférentiel, et un élément de réduction de bruit (4) appliqué sur une surface intérieure (5) dudit pneumatique (1) et s'étendant le long d'une partie prédominante d'un développement circonférentiel de la surface intérieure (5), dans lequel ledit élément de réduction de bruit (4) comprend une série (8) d'ouvertures radialement traversantes (8'), dans lequel ladite série (8) d'ouvertures s'étend le long dudit développement circonférentiel de la surface interne (5), dans lequel ladite série (8) d'ouvertures est placée de sorte qu'au moins une partie prédominante d'une zone de vue de dessus globale des ouvertures (8') de ladite série (8) d'ouvertures est placée au niveau d'un relief (3') desdits un ou plusieurs reliefs (3', 3"),
dans lequel ledit élément de réduction de bruit (4) comprend une ou plusieurs séries supplémentaires (9) d'ouvertures radialement traversantes (9'), dans lequel chaque série supplémentaire (9) d'ouvertures s'étend le long dudit développement circonférentiel de la surface intérieure (5), dans lequel les ouvertures (8', 9') sont agencées sur ledit élément de réduction de bruit (4) selon un schéma ordonné, dans lequel ledit schéma ordonné comprend un module de base (11) répété le long dudit développement circonférentiel, dans lequel ledit module de base (11) comprend un premier ensemble d'ouvertures appartenant à ladite série (8) d'ouvertures et un second ensemble d'ouvertures pour chacune desdites une ou plusieurs séries supplémentaires (9) d'ouvertures (9'), dans lequel ledit élément de réduction de bruit (4) comprend une pluralité de sous-éléments de réduction de bruit (4') appliqués circonférentiellement en séquence le long dudit développement circonférentiel de la surface intérieure (5) dudit pneumatique (1),
**caractérisé en ce que** chaque sous-élément de réduction de bruit (4') comprend un module de base (11).

2. Pneumatique (1) selon la revendication 1, dans lequel au moins une desdites une ou plusieurs séries supplémentaires (9) d'ouvertures (9') est placée de sorte qu'au moins une partie prédominante d'une zone de vue de dessus globale des ouvertures (9') de ladite au moins une série supplémentaire (9) d'ouvertures est placée au niveau d'un autre relief respectif (3") desdits un ou plusieurs reliefs (3', 3").

3. Pneumatique (1) selon la revendication 2, dans lequel ladite partie prédominante de la surface globale en vue de dessus des ouvertures (8') de ladite série (8) d'ouvertures, et/ou des ouvertures (9') de ladite au moins une série supplémentaire (9) d'ouvertures est supérieure ou égale à 60 % de ladite zone de vue de dessus globale.

4. Pneumatique (1) selon l'une quelconque des revendications précédentes, dans lequel ledit élément de réduction de bruit (4) s'étend sur sensiblement tout le développement circonférentiel de la surface intérieure (5), dans lequel les ouvertures (8') de ladite série (8) d'ouvertures, et/ou les ouvertures (9') de chacune desdites une ou plusieurs séries supplémentaires (9) d'ouvertures, sont agencées sensiblement le long de tout le développement circonférentiel de ladite surface intérieure (5).

5. Pneumatique (1) selon l'une quelconque des revendications précédentes, dans lequel ladite série (8) d'ouvertures comprend des ouvertures (8') ayant la même forme et/ou les mêmes dimensions, dans lequel chacune desdites une ou plusieurs séries supplémentaires (9) d'ouvertures comprend des ouvertures (9') ayant la même forme et/ou les mêmes dimensions, dans lequel toutes les séries supplémentaires (9) comprennent le même nombre d'ouvertures, et dans lequel les ouvertures de toutes les séries supplémentaires d'ouvertures ont la même forme et/ou les mêmes dimensions et/ ou disposition circonférentielle.

6. Pneumatique (1) selon l'une quelconque des revendications précédentes, dans lequel une surface limite (14) de chaque ouverture (8', 9') a un développement sensiblement radial, dans lequel une section (16) de chaque ouverture, perpendiculaire à un axe de développement de ladite ouverture, est constante le long dudit axe de développement, et dans lequel les ouvertures de ladite série (8) d'ouvertures, et/ou les ouvertures de chacune desdites une ou plusieurs séries supplémentaires (9) d'ouvertures, sont sensiblement axialement alignées les unes avec les autres.

7. Pneumatique (1) selon l'une quelconque des revendications précédentes, dans lequel ledit élément de réduction de bruit (4) comprend au moins deux séries supplémentaires (9) d'ouvertures radialement traversantes (9'), agencées sur des côtés axialement opposés de ladite série (8) d'ouvertures (8').

8. Pneumatique (1) selon l'une quelconque des revendications précédentes, dans lequel chaque ouverture (9') desdites une ou plusieurs séries supplémentaires (9) d'ouvertures a une section, perpendiculaire à un axe de développement de celle-ci, ayant une forme allongée avec une dimension principale (L), dans lequel ladite dimension principale (L) des ouvertures est sensiblement parallèle audit développement circonférentiel.

9. Pneumatique (1) selon la revendication 8, dans lequel ladite dimension principale (L) de chaque ouverture a une longueur supérieure ou égale à 5 cm et inférieure ou égale à 15 cm, et dans lequel ladite forme allongée comprend deux parties d'extrémité (12) le long de ladite dimension principale (L) ayant une forme lobée et une partie centrale (13), de taille réduite, qui relie lesdites deux parties d'extrémité (12).

10. Pneumatique (1) selon l'une quelconque des revendications précédentes, dans lequel chaque sous-élément de réduction bruit (4') est un parallélépipède dans une configuration non déformée, dans lequel ledit élément de réduction de bruit (4) comprend un matériau absorbant le son, constitué de mousse polymère à cellules ouvertes, et dans lequel le matériau absorbant le son a une masse volumique allant d'environ 5 kg/m³à environ 60 kg/m³.

11. Pneumatique (1) selon l'une quelconque des revendications précédentes,
dans lequel ledit module de base (11) a un premier plan de symétrie (100) parallèle à un plan équatorial du pneumatique (1), et dans lequel ledit module de base (11) a un second plan de symétrie (200) perpendiculaire à un plan équatorial du pneumatique.

12. Pneumatique (1) selon l'une quelconque des revendications précédentes, dans lequel un nombre d'ouvertures dudit premier ensemble est supérieur ou égal à un, et inférieur ou égal à trois, et dans lequel un nombre d'ouvertures de chaque deuxième ensemble est supérieur ou égal à deux et inférieur ou égal à quatre.

13. Pneumatique (1) selon l'une quelconque des revendications précédentes, dans lequel chaque sous-élément de réduction de bruit (4') comprend un seul module de base (11).

14. Pneumatique (1) selon l'une quelconque des revendications précédentes, dans lequel chaque ouverture (8') de ladite série (8) d'ouvertures a une section, perpendiculaire à un axe de développement de celle-ci, de forme circulaire ayant un diamètre, dans lequel ledit diamètre est supérieur ou égal à 2 cm et inférieur ou égal à 6 cm.

15. Pneumatique (1) selon l'une quelconque des revendications précédentes, dans lequel un rapport entre un volume global de toutes les ouvertures présentes sur l'élément de réduction de bruit (4), et un volume global de l'élément de réduction de bruit (4), est supérieur ou égal à 0,1 et inférieur ou égal à 0,4.
